# EUROPEAN PATENT APPLICATION

(11) **EP 4 793 568 A1**
(43) Date of publication of application: **19.08.2026**
(21) Application number: 25859481.1
(22) Date of filing: 01.09.2025
(51) Int. Cl.: F24F 13/14, F24F 13/15, F24F 13/08, H02K 5/00, F24F 1/0011

(54) **MOTOR AIR GUIDE ASSEMBLY AND AIR CONDITIONING DEVICE**

(30) Priority: 02.09.2024 CN 202411224024
(71) Applicant: Xiaomi Technology (Wuhan) Co., Ltd., Wuhan, Hubei 430000 (CN); Xiaomi Smart Appliances (Wuhan) Co., Ltd., Wuhan, Hubei 430073 (CN); Beijing Xiaomi Mobile Software Co., Ltd., Beijing 100085 (CN)
(72) Inventor: MU, Yuan, Wuhan, Hubei 430000 (CN); ZHENG, Liming, Wuhan, Hubei 430000 (CN); ZHANG, Huazhong, Wuhan, Hubei 430000 (CN); XIONG, Benwen, Wuhan, Hubei 430000 (CN)
(74) Representative: Stöckeler, Ferdinand
(86) International application number: PCT/CN2025/118336
(87) International publication number: WO 2026/046408

(57) **Abstract**

Provided are a motor air guide assembly and an air conditioning device. The motor air guide assembly comprises an air guide frame, a mounting base, and a motor; an accommodating cavity is formed in the air guide frame; the mounting base is detachably mounted on the air guide frame and arranged opposite to the accommodating cavity; the motor is detachably mounted on the mounting base; and at least part of the motor is embedded in the accommodating cavity.

## Description

### CROSS-REFERENCE TO RELATED APPLICATION

The present application claims priority to Chinese Patent Application No. 202411224024.5, filed on September 2, 2024, the entire content of which is incorporated herein by reference.

### FIELD

The present invention relates to the field of air conditioning technologies, and more particularly to a motor and air guiding assembly and an air conditioning device.

### BACKGROUND

In related arts, for an air-conditioner indoor unit designed with an upward air outlet, a space between an evaporator and a gentle breeze panel, i.e., an air swinging plate, is relatively small. In this case, a motor configured to drive the swing of the gentle breeze panel needs to be arranged at an end of the evaporator. However, this arrangement requires providing mounting structures for assembling the motor on some components, and the mounting structures make it difficult for the components to be released from molds, which is not conducive to the overall processing and production.

### SUMMARY

Embodiments of the present application are intended to solve at least one of the problems existing in the related art to at least some extent.

To this end, embodiments of the present invention provide a motor and air guiding assembly. An air guiding frame and a mounting seat of the motor and air guiding assembly are provided as separate parts, which facilitates the processing and mold release of the mounting seat and also improves the convenience of installation and disassembly.

Embodiments of the present invention further provide an air conditioning device including the above-mentioned motor and air guiding assembly.

The motor and air guiding assembly according to the embodiments of the present invention includes: an air guiding frame having an accommodating cavity; a mounting seat detachably assembled to the air guiding frame and arranged opposite to the accommodating cavity; and a motor detachably assembled to the mounting seat, and at least part of the motor being embedded in the accommodating cavity.

In some embodiments, the mounting seat is arranged on an inner side of the air guiding frame for facing a base, and the motor is arranged on an outer side of the mounting seat.

In some embodiments, the air guiding frame is connected to the mounting seat through first fasteners, one of the air guiding frame and the mounting seat has a plurality of first pillars connected to the first fasteners, and the other of the air guiding frame and the mounting seat has a plurality of first holes configured for the first fasteners to pass through.

In some embodiments, the plurality of first pillars are arranged on the air guiding frame, the mounting seat has a plurality of bosses, the plurality of bosses protrude from an inner side of the mounting seat and form grooves on an outer side of the mounting seat facing away from the base, the plurality of first pillars are inserted and fitted into the grooves, and the plurality of first holes are arranged in bottom walls of the grooves.

In some embodiments, the mounting seat includes a first plate portion and a second plate portion arranged in a staggered manner along an inner-outer direction of the mounting seat, and each of the first plate portion and the second plate portion has the plurality of bosses.

In some embodiments, one of the air guiding frame and the mounting seat has a snap, the other of the air guiding frame and the mounting seat has a snap groove, and the snap is snap-fitted into the snap groove.

In some embodiments, the motor is connected to the mounting seat through second fasteners, a plurality of second pillars connected to the second fasteners are arranged on an outer side of the mounting seat facing the accommodating cavity, and the motor has a plurality of second holes configured for the second fasteners to pass through.

In some embodiments, a plurality of positioning ribs are arranged on an outer peripheral side of each second pillar, the plurality of positioning ribs protrude beyond an end of the second pillar facing the accommodating cavity and are arranged at intervals along a circumferential direction of the second pillar, the motor has an lug plate, the lug plate is fitted into a space enclosed by the plurality of positioning ribs to achieve assembling and positioning of the motor and the mounting seat, and the second hole is defined in the lug plate.

In some embodiments, the mounting seat has a through hole configured for a drive shaft of the motor to pass through the mounting seat.

In some embodiments, a transmission shaft is further included, an extending direction of the transmission shaft is perpendicular to an extending direction of the drive shaft, an end of the transmission shaft is rotatably connected to the drive shaft, and another end of the transmission shaft is configured to be rotatably connected to a connecting rod that drives swing of an air swinging plate; and the mounting seat has a limit shaft, the limit shaft is located in the through hole, the limit shaft is arranged coaxially with the drive shaft, a side of the transmission shaft facing away from the drive shaft has a insertion groove, and the limit shaft is rotatably assembled into the insertion groove.

In some embodiments, the mounting seat has a wire clamping groove, and the wire clamping groove is arranged at a peripheral edge of the mounting seat and is configured to clamp a wire.

The air conditioning device according to the embodiments of the present invention includes the motor and air guiding assembly as described in any one of the above embodiments.

Advantageous effects are as follows. In the motor and air guiding assembly and the air conditioning device according to the embodiments of the present invention, the air guiding frame and the mounting seat of the motor and air guiding assembly are provided as separate parts, which facilitates the processing and mold release of the mounting seat and also improves the convenience of installation and disassembly.

### BRIEF DESCRIPTION OF THE DRAWINGS

FIG. 1 is a top view of a motor and air guiding assembly according to an embodiment of the present invention.
FIG. 2 is a rear perspective view and partial enlarged view of a motor and air guiding assembly according to an embodiment of the present invention.
FIG. 3 is a rear perspective view of a mounting seat according to an embodiment of the present invention.
FIG. 4 is a front perspective view of a mounting seat according to an embodiment of the present invention.
FIG. 5 is a schematic view of an assembly between a transmission shaft, a limit shaft, and a connecting rod according to an embodiment of the present invention.
FIG. 6 is a longitudinal sectional schematic view at a limit shaft according to an embodiment of the present invention.
FIG. 7 is a schematic view of an arrangement of the transmission shaft, the connecting rod, and an air swinging plate according to an embodiment of the present invention.

### References signs:

1 air guiding frame; 11 accommodating cavity; 12 first pillar; 13 snap groove;
2 mounting seat; 21 first hole; 22 boss; 23 first plate portion; 24 second plate portion; 25 second pillar; 251 positioning rib; 26 snap; 27 through hole; 28 limit shaft; 29 wire clamping groove;
3 motor; 31 drive shaft;
4 transmission shaft; 41 insertion groove;
5 connecting rod;
6 air swinging plate.

### DETAILED DESCRIPTION

Embodiments of the present invention are described in detail below, examples of which are shown in the accompanying drawings. The following embodiments described with reference to the accompanying drawing are illustrative. It should be understood that the embodiments described are intended to explain the present invention, but not to limit the present invention.

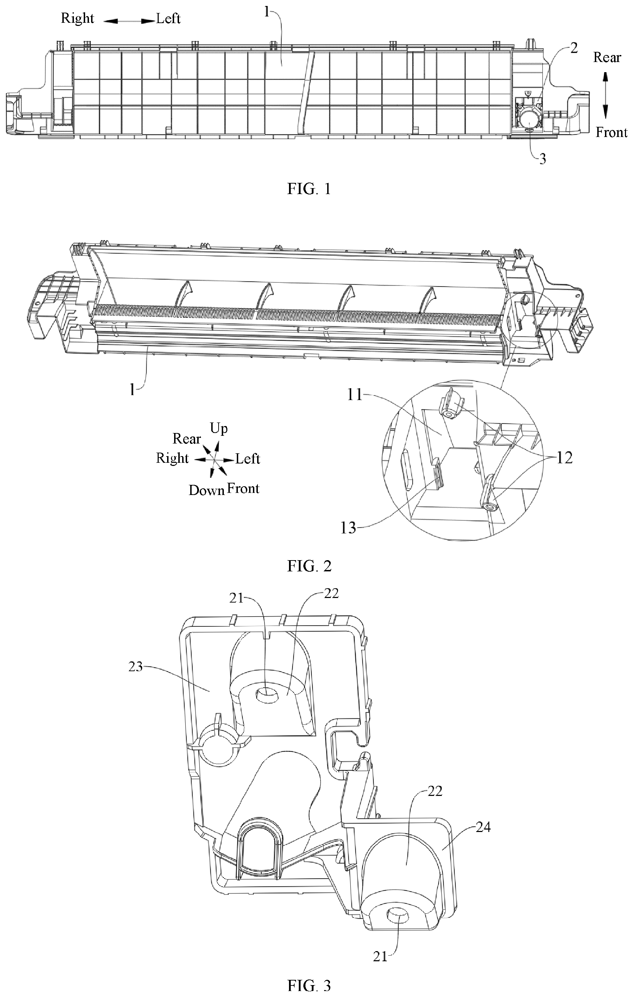

As shown in FIG. 1, a motor and air guiding assembly of embodiments of the present invention includes an air guiding frame 1, a mounting seat 2, and a motor 3.

The air guiding frame 1 has an accommodating cavity 11. For example, as shown in FIG. 1, a material of the air guiding frame 1 may be plastic or the like, the air guiding frame 1 may be integrally injection-molded and may extend in a left-right direction, the accommodating cavity 11 may be a groove-shaped structure integrally formed on the air guiding frame 1, and the accommodating cavity 11 may be located at a left side of the air guiding frame 1.

The mounting seat 2 is detachably assembled to the air guiding frame 1 and arranged opposite to the accommodating cavity 11. For example, as shown in FIG. 1, a material of the mounting seat 2 may be plastic or the like, the mounting seat 2 may be processed by integral injection molding, the mounting seat 2 may be assembled at a rear side of the air guiding frame 1 by means of screw-connection, snap-fit, etc., and in a front-rear direction, the accommodating cavity 11 may be located in front of the mounting seat 2, thereby allowing the mounting seat 2 to block a rear side of the accommodating cavity 11.

The motor 3 is detachably assembled to the mounting seat 2, and at least part of the motor 3 is embedded in the accommodating cavity 11. For example, as shown in FIG. 1, the motor 3 may be a stepper motor 3, the motor 3 may be fixed at a front side of the mounting seat 2 by means of screw-connection, snap-fit, etc., and the entire motor 3 may be inserted into the above-mentioned accommodating cavity 11, thereby facilitating the installation and fixation of the motor 3, achieving the fit and matching between the air guiding frame 1 and the motor 3, and also providing a protective effect for the motor 3.

In the motor and air guiding assembly of the embodiments of the present invention, the air guiding frame 1 and the mounting seat 2 of the motor and air guiding assembly are provided as separate parts, which facilitates the processing and mold release of the mounting seat 2 and also improves the convenience of installation and disassembly.

In some embodiments, the mounting seat 2 is arranged on an inner side of the air guiding frame 1 for facing a base, and the motor 3 is arranged on an outer side of the mounting seat 2. It should be noted that during actual assembly, the air guiding frame 1 may be assembled at a front side of the base, where the base may be arranged facing a wall, and an air outlet may be arranged at a front side of the air guiding frame 1. The inner side of the air guiding frame 1 refers to a side of the air guiding frame 1 facing the base, i.e., the rear side of the air guiding frame 1 in FIGS. 1 and 2, and an outer side of the air guiding frame 1 refers to a side of the air guiding frame 1 facing an outer panel or the air outlet, i.e., the front side of the air guiding frame 1 in FIGS. 1 and 2.

Thus, the accommodating cavity 11 of the air guiding frame 1 may protrude toward the front side, thus allowing the installation of the motor 3 to fully utilize an abundant space at the front side of the air guiding frame 1, and achieving an optimized design for space utilization.

In some embodiments, the air guiding frame 1 is connected to the mounting seat 2 through first fasteners, one of the air guiding frame 1 and the mounting seat 2 has a plurality of first pillars 12 connected to the first fasteners, and the other of the air guiding frame 1 and the mounting seat 2 has a plurality of first holes 21 for the first fasteners to pass through.

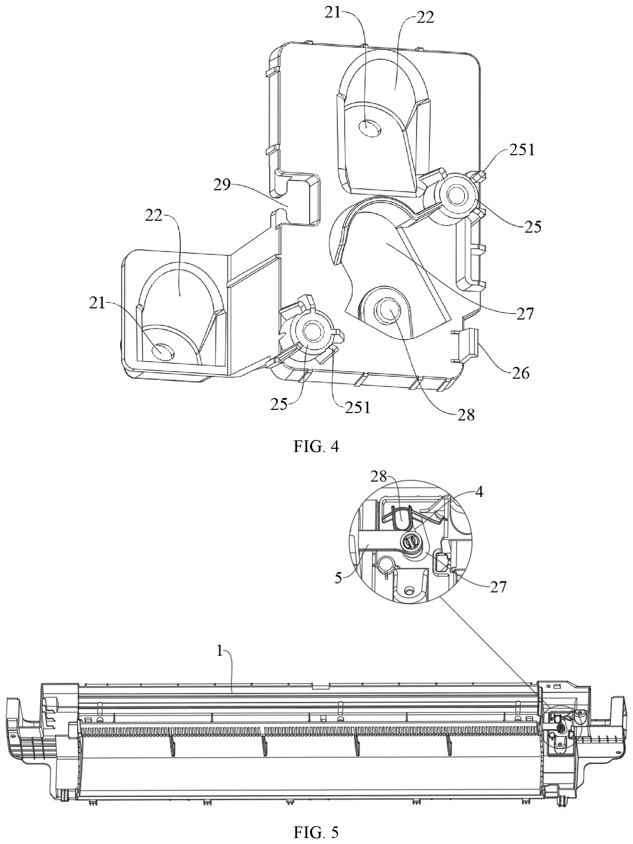

For example, as shown in FIG. 1, the first pillars 12 may be integrally formed on the air guiding frame 1, the first pillars 12 may be cylindrical, and a threaded hole may be arranged inside the first pillars 12. As shown in FIGS. 3 and 4, the first holes 21 may be round holes, and the first holes 21 may penetrate through the mounting seat 2 along a thickness direction of the mounting seat 2.

The first fastener may be a screw or the like. During assembly, the first fastener may be passed through the first holes 21 and threadedly assembled with the first pillars 12, thereby ensuring the structural stability of the connection between the air guiding frame 1 and the mounting seat 2.

In some embodiments, the first pillars 12 are arranged on the air guiding frame 1, the mounting seat 2 has a plurality of bosses 22, the bosses 22 protrude from an inner side of the mounting seat 2 and form grooves on an outer side of the mounting seat 2 facing away from the base, the first pillars 12 are inserted and fitted into the grooves, and the first holes 21 are arranged in bottom walls of the grooves.

For example, as shown in FIG. 2, two first pillars 12 may be provided, both of the two first pillars 12 may be integrally formed on the air guiding frame 1 by injection molding, and both of the two first pillars 12 may be located at the rear side of the air guiding frame 1.

As shown in FIGS. 3 and 4, two bosses 22 are provided on the mounting seat 2, both of the two bosses 22 may be integrally formed on the mounting seat 2 by injection molding, and the bosses 22 may have an arch-shaped structure. Each boss 22 may protrude toward a rear side of the mounting seat 2 and be defined at the front side of the mounting seat 2, and each boss 22 may be provided with one first hole 21.

During assembly, the two first pillars 12 on the air guiding frame 1 may be inserted in one-to-one correspondence into the grooves of the two bosses 22, thus the limiting and constraining effect between the air guiding frame 1 and the mounting seat 2 may be enhanced. In addition, the arrangement of the bosses 22 may also enhance the structural strength of the mounting seat 2.

In some embodiments, the mounting seat 2 includes a first plate portion 23 and a second plate portion 24 arranged in a staggered manner along an inner-outer direction of the mounting seat 2, and each of the first plate portion 23 and the second plate portion 24 has the bosses 22.

For example, as shown in FIG. 3, both the first plate portion 23 and the second plate portion 24 may be plate-shaped, and a size of the first plate portion 23 is larger than a size of the second plate portion 24. Each of the first plate portion 23 and the second plate portion 24 may have one boss 22 integrally formed thereon.

The inner-outer direction of the mounting seat 2 may also be the front-rear direction, and the first plate portion 23 may be located at a front side of the second plate portion 24. During assembly, the first plate portion 23 may be arranged opposite to a cavity opening at the rear side of the accommodating cavity 11, and the second plate portion 24 may be overlapped on a peripheral portion of the cavity opening of the accommodating cavity 11, thus the limiting and constraining effect between the mounting seat 2 and the air guiding frame 1 may be enhanced.

In some embodiments, one of the air guiding frame 1 and the mounting seat 2 has a snap 26, and the other of the air guiding frame 1 and the mounting seat 2 has a snap groove 13, and the snap 26 is snap-fitted into the snap groove 13.

For example, as shown in FIG. 4, the snap 26 may be integrally formed on the mounting seat 2. Specifically, the snap 26 may be arranged at a peripheral edge of the aforementioned first plate portion 23. As shown in FIG. 2, the snap groove 13 may be provided on the air guiding frame 1 and may be located in the accommodating cavity 11.

During assembly, the mounting seat 2 and the air guiding frame 1 may be pre-positioned and pre-fixed by the snap-fit of the snap 26 and the snap groove 13, and then the air guiding frame 1 and the mounting seat 2 may be connected and fixed by the first fastener, which may improve assembly efficiency and also enhance the structural stability of the assembly of the air guiding frame 1 and the mounting seat 2.

In some embodiments, the motor 3 is connected to the mounting seat 2 through second fasteners, a plurality of second pillars 25 connected to the second fasteners are arranged on an outer side of the mounting seat 2 facing the accommodating cavity 11, and the motor 3 is provided with a plurality of second holes for the second fasteners to pass through.

For example, as shown in FIG. 4, two second pillars 25 may be integrally formed on the front side of the mounting seat 2, and a threaded hole may be provided in each second pillar 25. A peripheral side of the motor 3 may be provided with two lug plate, and each lug plate may have one second hole.

The second fastener may also be a screw or the like. During assembly, the second fastener may be passed through the second holes and threaded with the second pillars 25, thereby ensuring the structural stability of the assembly of the motor 3 and the mounting seat 2.

In some embodiments, an outer peripheral side of the second pillars 25 has a plurality of positioning ribs 251, the plurality of positioning ribs 251 protrude beyond an end of the second pillars 25 toward the accommodating cavity 11, the positioning ribs 251 are arranged at intervals along a circumferential direction of the second pillars 25, the motor 3 is provided with the lug plate, the lug plate is fitted into a space enclosed by the plurality of positioning ribs 251 to achieve the assembling and positioning of the motor 3 and the mounting seat 2, and the second hole is provided in the lug plate.

For example, as shown in FIG. 4, the peripheral side of each second pillar 25 may be provided with three positioning ribs 251, each positioning rib 251 may extend along an axial direction of the second pillar 25, and the plurality of positioning ribs 251 may be arranged at equal intervals along the circumferential direction of the second pillars 25. Each positioning rib 251 may protrude from a free end of the second pillar 25, and the free end refers to an end of the second pillar 25 facing the motor 3, thereby the three positioning ribs 251 may enclose a groove-shaped space at the free end of the second pillar 25.

During assembly, the lug plate at the peripheral side of the motor 3 may first be embedded in the groove-shaped space enclosed by the positioning ribs 251, which may achieve pre-positioning of the motor 3 during the installation of the motor 3, and then the motor may be connected and fixed to the mounting seat 2 by means of the second fastener, thereby improving the overall assembly efficiency.

In some embodiments, the mounting seat 2 is provided with a through hole 27, and the through hole 27 is configured for a drive shaft 31 of the motor 3 to pass through the mounting seat 2. For example, as shown in FIGS. 4 and 5, the through hole 27 may be an irregular hole structure, and the drive shaft 31 of the motor 3 mounted in the accommodating cavity 11 may extend from the through hole 27 to the rear side of the mounting seat 2, thereby facilitating the subsequent connection and assembly of the motor 3 with a transmission shaft 4.

In some embodiments, as shown in FIGS. 5 to 7, the motor and air guiding assembly includes a transmission shaft 4, an extending direction of the transmission shaft 4 is perpendicular to an extending direction of the drive shaft 31, an end of the transmission shaft 4 is rotatably connected to the drive shaft 31, and another end of the transmission shaft 4 is configured to be rotatably connected to a connecting rod 5 that drives the swing of an air swinging plate 6.

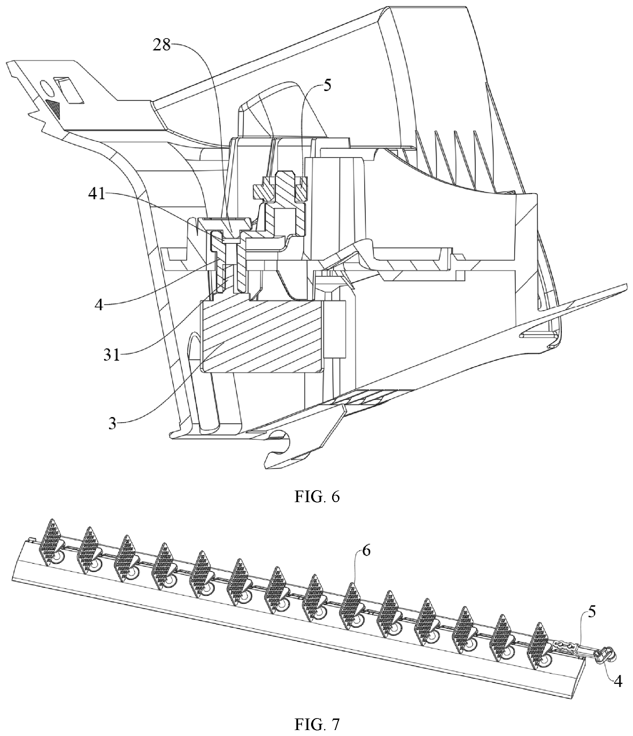

As shown in FIGS. 4 and 6, the mounting seat 2 has a limit shaft 28, and the limit shaft 28 is located in the through hole 27. For example, an extension portion may be integrally formed on the mounting seat 2, the extension portion may extend towards and into the through hole 27, and the limit shaft 28 may be integrally formed on the extension portion.

The limit shaft 28 is arranged coaxially with the drive shaft 31, a side of the transmission shaft 4 facing away from the drive shaft 31 has a insertion groove 41, and the limit shaft 28 is rotatably assembled into the insertion groove 41. For example, the transmission shaft 4 may be located between the limit shaft 28 and the drive shaft 31, and the drive shaft 31 may be located at a front side of the transmission shaft 4, and the limit shaft 28 may be located at a rear side of the transmission shaft 4. The insertion groove 41 may be a circular insertion groove and may be provided at the rear side of the transmission shaft 4, and the limit shaft 28 may be a circular shaft and may be directly inserted and assembled into the insertion groove 41.

During use, the drive shaft 31 of the motor 3 may drive the transmission shaft 4 to swing. At this time, since the limit shaft 28 is inserted and fitted with the transmission shaft 4 through the insertion groove 41, a situation where the transmission shaft 4 is suspended may be avoided, thus ensuring the stability of the transmission of the transmission shaft 4, and further facilitating driving each air swinging plate 6 into place through the connecting rod 5.

In some embodiments, the mounting seat 2 has a wire clamping groove 29, and the wire clamping groove 29 is arranged at a peripheral edge of the mounting seat 2 and configured to clamp wires. For example, as shown in FIG. 4, the wire clamping groove 29 may be provided on the aforementioned first plate portion 23, the peripheral edge of the first plate portion 23 may be provided with a notch, two protrusions may be arranged at an opening of the notch, and the two protrusions are arranged opposite to each other to make the wire clamping groove 29 a contracted opening structure. During use, wires of the motor 3 or the like may be clamped and fitted in the wire clamping groove 29, thereby facilitating the limiting and fixing of the wires and the like.

An air conditioning device of embodiments of the present invention is described below.

The air conditioning device of the embodiments of the present invention includes a motor and air guiding assembly, which may be the motor and air guiding assembly as described in any one of the above embodiments. The air conditioning device may be an air-conditioner indoor unit, and the motor and air guiding assembly may be installed in a housing of the air-conditioner indoor unit.

Although the above embodiments have been shown and described, it may be understood that the above embodiments are illustrative and shall not be understood as limitation to the present invention, and changes, modifications, alternatives and variations may be made in the above embodiments by those skilled in the art all fall within the protection scope of the present invention.

All embodiments of the present invention may be implemented independently or in combination with other embodiments, which are all regarded as the protection scope claimed by the present invention.

## Claims

1. A motor and air guiding assembly, comprising:
an air guiding frame having an accommodating cavity;
a mounting seat detachably assembled to the air guiding frame and arranged opposite to the accommodating cavity; and
a motor detachably assembled to the mounting seat, wherein at least part of the motor is embedded in the accommodating cavity.

2. The motor and air guiding assembly according to claim 1, wherein the mounting seat is arranged on an inner side of the air guiding frame configured for facing a base, and the motor is arranged on an outer side of the mounting seat.

3. The motor and air guiding assembly according to claim 1 or 2, wherein the air guiding frame is connected to the mounting seat through first fasteners, one of the air guiding frame and the mounting seat has a plurality of first pillars connected to the first fasteners, and the other of the air guiding frame and the mounting seat has a plurality of first holes configured for the first fasteners to pass through.

4. The motor and air guiding assembly according to claim 3, wherein the plurality of first pillars are arranged on the air guiding frame, the mounting seat has a plurality of bosses, the plurality of bosses protrude from an inner side of the mounting seat and form grooves on an outer side of the mounting seat facing away from the base, the plurality of first pillars are inserted and fitted in the grooves, and the plurality of first holes are arranged in bottom walls of the grooves.

5. The motor and air guiding assembly according to claim 4, wherein the mounting seat comprises a first plate portion and a second plate portion arranged in a staggered manner along an inner-outer direction of the mounting seat, and each of the first plate portion and the second plate portion has the boss.

6. The motor and air guiding assembly according to any one of claims 1 to 5, wherein one of the air guiding frame and the mounting seat has a snap, the other of the air guiding frame and the mounting seat has a snap groove, and the snap is snap-fitted in the snap groove.

7. The motor and air guiding assembly according to any one of claims 1 to 6, wherein the motor is connected to the mounting seat through second fasteners, a plurality of second pillars connected to the second fasteners are arranged on an outer side of the mounting seat facing the accommodating cavity, and the motor has a plurality of second holes configured for the second fasteners to pass through.

8. The motor and air guiding assembly according to claim 7, wherein a plurality of positioning ribs are arranged on an outer peripheral side of each second pillar, protrude beyond an end of the second pillar facing the accommodating cavity and are arranged at intervals along a circumferential direction of the second pillar, the motor has a lug plate fitted in a space enclosed by the plurality of positioning ribs to achieve assembling and positioning of the motor and the mounting seat, and the second hole is defined in the lug plate.

9. The motor and air guiding assembly according to any one of claims 1 to 8, wherein the mounting seat has a through hole configured for a drive shaft of the motor to pass through the mounting seat.

10. The motor and air guiding assembly according to claim 9, further comprising a transmission shaft, wherein an extending direction of the transmission shaft is perpendicular to an extending direction of the drive shaft, an end of the transmission shaft is rotatably connected to the drive shaft, and another end of the transmission shaft is configured to be rotatably connected to a connecting rod for driving swing of an air swinging plate, and
wherein the mounting seat has a limit shaft located in the through hole and arranged coaxially with the drive shaft, a side of the transmission shaft facing away from the drive shaft has an insertion groove, and the limit shaft is rotatably assembled in the insertion groove.

11. The motor and air guiding assembly according to any one of claims 1 to 10, wherein the mounting seat has a wire clamping groove, and the wire clamping groove is arranged at a peripheral edge of the mounting seat and is configured to clamp a wire.

12. An air conditioning device, comprising the motor and the air guiding assembly according to any one of claims 1 to 11.
